# EUROPÄISCHE PATENTANMELDUNG

(11) **EP 1 154 670 A1**
(43) Veröffentlichungstag der Anmeldung: **14.11.2001**
(21) Anmeldenummer: 00110087.4
(22) Anmeldetag: 12.05.2000
(51) Int. Cl.: H04Q 11/04, H04M 19/04

(54) **Netzabschlussgerät für ein Teilnehmerendgerät eines Telekommunikationsnetzes und Verfahren zur Bereitstellung einer Rufleerlaufspannung für ein Teilnehmerendgerät eines Telekommunikationsnetzes**

(71) Anmelder: Siemens Schweiz AG, 8047 Zürich (CH)
(72) Erfinder: Allegranza, Patrick, 8004 Zürich (CH)

(57) **Zusammenfassung**

Der Erfindung liegt die Aufgabe zugrunde, ein Netzabschlussgerät und ein Verfahren zur Bereitstellung einer Rufleerlaufspannung anzugeben, mit denen sichergestellt ist, dass eine von einem Betreiber des Telekommunikationsnetzes vorgegebene maximale Leistungsaufnahme besonders dann nicht überschritten wird, wenn das Netzabschlussgerät seine elektrische Leistung ausschliesslich über das Telekommunikationsnetz bezieht.

Erfindungsgemäss ist es vorgesehen, dass die Rufleerlaufspannung (U_{R0}) in Abhängigkeit von der Lastimpedanz (Z_{L}) in einer Teilnehmerschleife (12) des Teilnehmerendgeräts (10) bei der für einen Ruf des Teilnehmerendgeräts (10) vorgesehenen Frequenz (f_{R}) einstellbar ist.

Auf diese Weise ist es möglich, dass beispielsweise eine hochohmige Schleife entsprechend mit einer vergleichsweise hohen Rufleerlaufspannung U_{R0} gespiesen wird, entsprechend wird eine niederohmige Schleife mit vergleichsweise niedriger Spannung gespiesen. Diese von der Lastimpedanz der Schleife abhängige Einstellung der Rufleerlaufspannung U_{R0} auf den jeweils entsprechenden Wert entspricht damit der Realisierung eines verlustfreien virtuellen Innenwiderstands des Rufgenerators. Infolge dieser lastabhängigen Einstellung ändert sich der Rufstrom I_{R} nur in sehr engen Grenzen, sodass das die Leistungsaufnahme charakterisierende Produkt aus Versorgungspannung des Rufgenerators und dem Rufstrom I_{R} konstant und unterhalb eines maximal zulässigen Wertes für die Leistungsaufnahme gehalten wird.

## Beschreibung

vieradrige digitale S-Schnittstelle sowie zwei jeweils zweiadrige analoge a/b-Schnittstellen zu unterstützen.

Ganz anders stellt sich diese Situation dar, wenn die Spannungsversorgung aus dem öffentlichen Stromnetz ausfällt. Das ISDN-Netzabschlussgerät ist in diesem Fall nur noch über eine sogenannte U-Schnittstelle mit einer externen Spannungsversorgung verbunden. Diese U-Schnittstelle stellt zugleich eine zweiadrige Verbindung zu einer Vermittlungsstelle des Telekommunikationsnetzes dar. Diese Spannungsversorgung ist eine auf der zweipoligen Verbindung anliegende Gleichspannung im üblichen Bereich von etwa 27 bis 115 V, welche jedoch hinsichtlich der abgebbaren Leistung stark beschränkt ist. Die hier maximal zur Verfügung stehende Leistung ist in heute verbreiteten Telekommunikationsnetzen auf etwa 1400 mW beschränkt.

Um daher bei einem Ausfall der öffentlichen Stromversorgung, was nachfolgend als Notbetrieb bezeichnet wird, zumindest eine analoge Schnittstelle des ISDN-Netzabschlussgeräts betreiben zu können, ist einer besonders verlustleistungsarmen Implementierung dieser analogen Schnittstellen hohe Priorität einzuräumen. Ein überhöhter Leistungsbezug während dieses Zeitraums, in der das ISDN-Netzabschlussgerät von einer Vermittlungsstelle über die U-Schnittstelle ferngespeist wird, führt zwangsläufig zu einem Ausfall der Verbindung in Folge des Zusammenbruchs der Versorgungsspannung.

Die Anforderungen an den Rufgenerator sind daher derart, dass an hochomigen Lasten eine höhere Rufspannung gefordert wird als an niederohmigen Lasten. Selbstverständlich muss der Rufgenerator dabei hochgradig kurzschlussfest sein. Derartige Anforderungen werden in der Regel durch einen Rufgenerator mit Leerlaufspannung U_{R0} und einem Innenwiderstand Rᵢ erfüllt, wobei die nicht an eine Teilnehmerschleife abgegebene Leistung im Innenwiderstand Rᵢ des Rufgenerators vernichtet wird. Als Teilnehmerschleife wird dabei das Teilnehmerendgerät inklusive der Anschlussleitungen definiert.

Bestimmte Telefongesellschaften fordern hinsichtlich des Rufs eines Teilnehmerendgeräts ein sogenanntes Unbalanced ringing, das heisst, die gesamte Rufamplitude wird auf eine der beiden Adern der analogen a/b-Schnittstelle eingekoppelt, wohingegen die andere Ader der Schnittstelle an der Gerätemasse liegt. Der Rufstrom I_{R} fliesst daher vom Rufgenerator durch ein Rufelement des Teilnehmerendgeräts zur Masse.

Wie schon voranstehend erwähnt, darf die Leistungsaufnahme des ISDN-Netzabschlussgeräts im Notbetrieb in jedem Zeitpunkt nicht mehr als beispielsweise maximal 1400 mW betragen. Hinsichtlich der Überschreitung dieser maximalen Leistungsaufnahme ist nur der Zeitraum des Rufs am Teilnehmerendgerät kritisch. Um die Forderung dieser maximal zulässigen Leistungsaufnahme einhalten zu können, wird bisher ein vergleichsweise kostspieliger diskret realisierter Rufgenerator basierend auf Pulsweitenmodulation mit einem hohen Wirkungsgrad eingesetzt.

Anderseits werden zur Implementierung der analogen Schnittstelle in einem ISDN-Netzabschlussgerät heute hoch integrierte Chips verwendet, wie beispielsweise die zwei Chip-DuSLIC-Lösung. Ein derartiger Chipsatz kann aus einem Schnittstellenbaustein, beispielsweise unter der Typenbezeichnungen SLIC PEB 4266 von der Firma Siemens erhältlich, und einem Signalprozessor, beispielsweise unter der Typenbezeichnung SLICOFI PEB 3265 von der Firma Siemens erhältlich, bestehen. In diesem Chipsatz ist der Rufgenerator ebenfalls integriert. Es ist ein besonderer Vorteil dieses Chipsatzes, dass sich charakteristische Daten, wie die Rufleerlaufspannung U_{R0} und die Frequenz f_{R} des Rufsignals, in weiten Bereichen softwaremässig einstellen lassen.

Hierdurch ist ein Innenwiderstand des Rufleerlaufspannungsgebers nur virtuell realisiert und damit kann der Rufgenerator weitgehend verlustfrei betrieben werden.

Unbefriedigend ist es bei dieser Lösung jedoch, dass aufgrund der fest vorgegebenen Rufleerlaufspannung durch eine niederohmige Teilnehmerschleife ein vergleichsweise grosser Laststrom fliesst, wodurch die Leistungsaufnahme entsprechend hoch ist. Entsprechend fliesst durch eine hochohmige Teilnehmerschleife ein entsprechend kleinerer Strom, wodurch auch die Leistungsaufnahme gegenüber der niederohmigen Schleife stark abnimmt.

Auf diese Weise ist die derzeitige Lösung mit dem Nachteil behaftet, dass die im Notbetrieb aus der U-Schnittstelle aufgenommene elektrische Leistung entscheidend von der Impedanz der Teilnehmerschleife abhängt und es so keineswegs sichergestellt werden kann, dass die im Notbetrieb maximal zulässige Leistungsentnahme von beispielsweise 1400 mW nicht überschritten wird. Deren Überschreitung würde jedoch den Ausfall des ISDN-Netzabschlussgeräts und in der Folge den Ausfall des Teilnehmerendgeräts in äusserst unerwünschter Weise herbeiführen.

Der Erfindung liegt daher die Aufgabe zugrunde, ein Netzabschlussgerät und ein Verfahren zur Bereitstellung einer Rufleerlaufspannung anzugeben, mit denen sichergestellt ist, dass eine von einem Betreiber des Telekommunikationsnetzes vorgegebene maximale Leistungsaufnahme besonders dann nicht überschritten wird, wenn das Netzabschlussgerät seine elektrische Leistung ausschliesslich über das Telekommunikationsnetz bezieht.

Diese Aufgabe wird bezüglich des Netzabschlussgeräts der eingangs genannten Art erfindungsgemäss dadurch gelöst, dass der Rufleerlaufspannungsgeber die Rufleerlaufspannung in Abhängigkeit von der Last, insbesondere von der Lastimpedanz und/oder von dem Betrag der Lastimpedanz, in einer Teilnehmerschleife bei der für einen Ruf des Teilnehmerendgeräts vorgesehenen Frequenz einstellt.

Bezüglich des eingangs genannten Verfahrens wird diese Aufgabe erfindungsgemäss dadurch gelöst, dass die Rufleerlaufspannung in Abhängigkeit von der Last und der für einen Ruf des Teilnehmerendgeräts vorgesehenen Frequenz eingestellt wird.

Dabei kann es vorgesehen sein, dass die Last, insbesondere die Lastimpedanz und/oder der Betrag der Lastimpedanz, einer Teilnehmerschleife zuvor bestimmt wird. Alternativ ist es jedoch auch möglich, dass die Last am Netzabschlussgerät eingestellt ist oder von dem Teilnehmerendgerät auf Anfrage durch das Netzabschlussgerät an dasselbe übermittelt wird.

Auf diese Weise ist es möglich, dass bespielsweise eine hochohmige Teilnehmerschleife entsprechend mit einer vergleichsweise hohen Rufleerlaufspannung U_{R0} gespiesen wird, entsprechend wird eine niederohmige Teilnehmerschleife mit vergleichsweise niedriger Spannung gespiesen. Diese von der Last der Teilnehmerschleife abhängige Einstellung der Rufleerlaufspannung U_{R0} auf den jeweils entsprechenden Wert entspricht damit der Realisierung eines verlustfreien virtuellen Innenwiderstands des Rufgenerators. In Folge dieser lastabhängigen Einstellung ändert sich der Rufstrom I_{R} nur in sehr engen Grenzen, sodass das die Leistungsaufnahme charakterisierende Produkt aus im Netzabschlussgerät für den Rufgenerator transformierte Versorgungspannung und dem Rufstrom I_{R} konstant und unterhalb eines maximal zulässigen Wertes für die Leistungsaufnahme gehalten wird.

In zweckmässiger Ausgestaltung der Erfindung ist es vorgesehen, dass die Last der Teilnehmerschleife unmittelbar vor dem Ruf des Teilnehmerendgeräts bestimmbar ist, sodass diese Bestimmung der Last nur dann temporär und nur für das zu rufende Teilnehmerendgerät durchgeführt werden muss.

In messtechnisch besonders einfacher Weise kann es zur Bestimmung der Last der Teilnehmerschleife vorgesehen sein, dass an die Teilnehmerschleife eine Wechselspannung anlegbar ist, die hinsichtlich Frequenz und Amplitude mit einem Sprachsignals auf dieser Teilnehmerschleife vergleichbar ist. Der Innenwiderstand dieser Wechselspannungsquelle entspricht der Sendeimpedanz für Sprachsignale, beispielsweise 600 Ohm reell. Mit den bekannten Grössen Frequenz und Höhe der Amplitude dieser Wechselspannung ist die Lastimpedanz leicht bestimmbar.

In weiterer Ausgestaltung dieses voranstehenden Merkmals ist es vorgesehen, dass die Wechselspannung unmittelbar nacheinander mit zwei verschiedenen Frequenzen anlegbar ist, wodurch sich ein Gleichungssystem mit den beiden Spannungen U₁, gemessen bei der Frequenz f₁, und U₂, gemessen bei der Frequenz f₂, den bekannten Grössen für die beiden Frequenzen f₁ und f₂, dem bekannten Innenwiderstand der Wechselspannungsquelle und der bekannten Amplitude der Wechselspannung ergibt. Aus diesem Gleichungssystem sind die gewünschten Werte für den Ohmschen Widerstand der Schleife und die Kapazität der Schleife des Teilnehmerendgeräts leicht zu errechnen. Hieraus kann wiederum leicht die Lastimpedanz und/oder der Betrag der Lastimpedanz abgeleitet werden.

Damit erlaubt diese Vorgehensweise nicht nur die Bestimmung des Ohmschen Widerstands R_{L} der Schleife, sondern auch der Kapazität C_{L} der Schleife, wodurch auch der Betrag der Lastimpedanz Z_{L} bestimmbar ist.

Aus diesem Wert für den Betrag der Lastimpedanz |Z_{L}| kann daher zusammen mit der vorgesehenen Frequenz der Rufleerlaufspannung, beispielsweise 25 Hz, die Grösse der benötigten Amplitude der Rufleerlaufwechselspannung bestimmt werden. Wenn dann - wie weiter oben schon erläutert - ein Halbleiterchipsatz für die Implementierung der analogen a/b-Schnittstellen und des Rufgenerators verwendet ist, kann die Rufleerlaufspannung U_{R0} softwaremässig eingestellt werden. Folglich kann auch in einem nicht gegenständlich existierenden Innenwiderstand keine elektrische Leistung umgesetzt werden, wodurch sich die gewünschte Verlustleistungsoptimierung ergibt.

Ein weiterer kostengünstiger Aufbau des Netzabschlussgeräts ist gegeben, wenn ein Kennfeld vorgesehen ist, aus dem ein der ermittelten Last entsprechender Wert für die durchzuschaltenden Rufleerlaufspannung entnehmbar ist. Daher muss eine Auswerteeinheit im Netzabschlussgerät nicht selbstständig die entsprechende Rufleerlaufspannung berechnen, sondern muss nur noch dann in Erscheinung treten, wenn eine Interpolation zwischen zwei benachbarten aus dem Kennfeld entnommenen Spannungswerten erforderlich sein sollte. Alternativ ist es hier auch möglich, immer auf den jeweils höheren oder niedrigeren Wert des Kennfeldes zuzugreifen.

Weitere vorteilhafte Ausgestaltungen der Erfindung sind im übrigen Unteransprüchen zu entnehmen.

Ausführungsbeispiele der Erfindung werden anhand einer Zeichnung näher erläutert. Dabei zeigen:
- Figur 1: in schematischer Darstellung das Blockschaltbild eines ISDN-Netzabschlussgerät; und
- Figur 2: ein Ablaufdiagramm eines Verfahrens zur Bereitstellung einer hinsichtlich der Leistungsaufnahme begrenzten Rufleerlaufspannung für ein Teilnehmerendgerät eines Telekommunikationsnetzes.

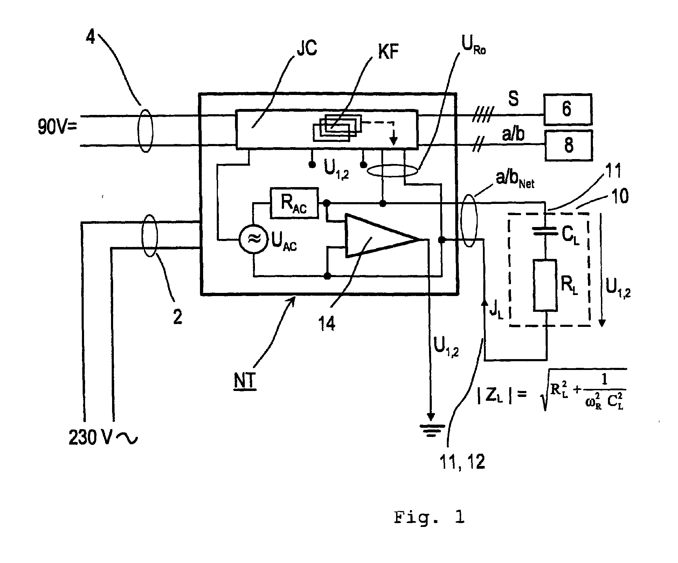

Figur 1 zeigt in schematischer Darstellung ein ISDN-Netzabschlussgerät - nachfolgend als Abschlussgerät NT bezeichnet - sowie dessen netzseitige Anschlüsse. Zum Betrieb des Abschlussgeräts NT wird üblicherweise eine Wechselspannung 2 mit 230 V verwendet, die einem öffentlichen Stromnetz entnommen wird. Eine U-Schnittstelle 4 zu einer hier nicht weiter dargestellten Vermittlungsstelle ist zweiadrig ausgeführt und mit einer Gleichspannung von im Ausführungsbeispiel etwa 90 V beaufschlagt. Diese Gleichspannung liegt damit in dem üblicherweise gebräuchlichen Intervall von 28 bis 115 V. Diese Gleichspannung wird im Abschlussgerät NT üblicherweise in eine annähernd konstante Gleichspannung für den Betrieb eine Rufgenerators umgewandelt.

Das Abschlussgerät NT verlassen insgesamt drei Schnittstellen. Als erstes ist eine vieradrig ausgeführte digitale S-Schnittstelle S zu nennen, die an ein Teilnehmerendgerät, wie zum Beispiel ein ISDN-Telefon oder dergleichen, geführt ist. Weiter verfügt das Abschlussgerät NT über zwei jeweils zweiadrig ausgeführte analoge Schnittstellen a/b und a/b_{Not}. Auch die analogen Schnittstellen a/b, a/b_{Not} sind jeweils mit einem Teilnehmerendgerät 8 bzw. 10 verbunden. Vorliegend macht bereits die Bezeichnung a/b_{Not} deutlich, dass diese Schnittstelle für den sogenannten Notbetrieb voreingestellt ist. Es kann jedoch alternativ eine flexiblere Zuordnung dahingehend vorgesehen sein, dass die jeweils gerade gerufene analoge Schnittstelle für den Notbetrieb bedient wird.

In der gezeigten Darstellung ist das Teilnehmerendgerät 10 im Ruhezustand in Form seines Ersatzschaltbildes einer zu einem Lastwiderstand R_{L} in Serie geschalteten Lastkapazität C_{L} angeführt. Die analoge Schnittstelle a/b_{Not} ist so in dem Abschlussgerät NT implementiert, dass bei einem Ausfall der Spannungsversorgung 2 aus dem öffentlichen Stromnetz diese analoge Schnittstelle a/b_{Not} für den Notbetrieb bedient wird. Als Spannungsversorgung für den Notbetrieb dient die an der U-Schnittstelle 4 anliegende Gleichspannung von 90 V. Um jedoch die Aufrechterhaltung dieser Verbindung im Notbetrieb nicht zu gefährden, muss sicher vermieden werden, dass die aus der U-Schnittstelle 4 aufgenommene Leistung im Ausführungsbeispiel 1400 mW übersteigt.

Um diese über die U-Schnittstelle 4 aufgenommene maximale elektrische Leistung im Notbetrieb dauerhaft, das heisst im besonderen bei Ruf des Teilnehmerendgeräts 10, unterhalb der maximalen zulässigen Leistungsaufnahme von 1400 mW zu halten, ist es vorgesehen, eine Rufleerlaufspannung U_{R0} an das Teilnehmerendgerät 10 anzulegen, welche in Abhängigkeit von der Lastimpedanz einer gesamten Teilnehmerschleife 12, d.h. das Teilnehmerendgerät 10 inklusive Leitung 11, eingestellt ist.

Zur Einstellung dieser Rufleerlaufspannung U_{R0} weist das Abschlussgerät NT einen Chipsatz IC auf, welcher eine Wechselspannungsquelle U_{AC} schaltet, damit die Schleife 12 mit dem Teilnehmerendgerät 10 nacheinander mit zwei Wechselspannungen unterschiedlicher Frequenz f₁, f₂ vermessen werden kann. Dabei wird mittels eines Differenzverstärkers 14 die über der Schleife 12 bei der Wechselspannung mit Frequenz f₁ abfallendene Spannung U₁ und die bei der Wechselspannung mit Frequenz f₂ abfallende Spannung U₂ gemessen. Die in der Figur eingezeichnete Masse ist dabei ein internes Elektronikground des Abschlussgeräts NT ohne einen Bezug zu einer externen Masse.

In dem Chipsatz IC selber werden anschliessend aus einem aus zwei Gleichungen bestehenden Gleichungssystem mit den gemessenen Grössen U₁ und U₂ sowie mit den bekannten Grössen Amplitude der Wechselspannung Û_{AC}, Innenwiderstand R_{AC} der Wechselspannungsquelle U_{AC}, den bekannten Frequenzen f₁ und f₂ die unbekannten Grössen Kapazität C_{L} und Widerstand R_{L} der Schleife 12 bestimmt.

Mittels des aus der Lastkapazität C_{L} und dem Lastwiderstand R_{L} bestimmten Betrag der Lastimpedanz und der für den Ruf des Teilnehmerendgeräts vorgesehenen Ruffrequenz f_{R} der Rufleerlaufspannung U_{R0} wird aus einem Kennfeld KF ein Wert für die Rufleerlaufspannung U_{R0} abgerufen, welcher sicherstellt, dass das Produkt von für den Rufgenerator umgewandelter Gleichspannung und dem in der Teilnehmerschleife 12 fliessenden Laststrom I_{L}, die in diesem Ausführungsbeispiel vorgeschriebene maximale Gesamtleistungsentnahme des Abschlussgeräts NT von 1400 mW nicht übersteigt.

Für die Bestimmung des Realteils der Lastimpedanz ist es besonders vorteilhaft, dass die Spannungsamplitude Û_{AC} der Wechselspannung U_{AC} etwa dieselbe Grösse wie ein in der Schleife 12 transportiertes Sprachsignal aufweist, weil auf diese Weise von einem Innenwiderstand R_{AC} ausgegangen werden kann, der etwa der Sendeimpedanz für diese Sprachsignale entspricht. Dieser Wert kann beispielsweise vom Betrage her 600 Ohm aufweisen.

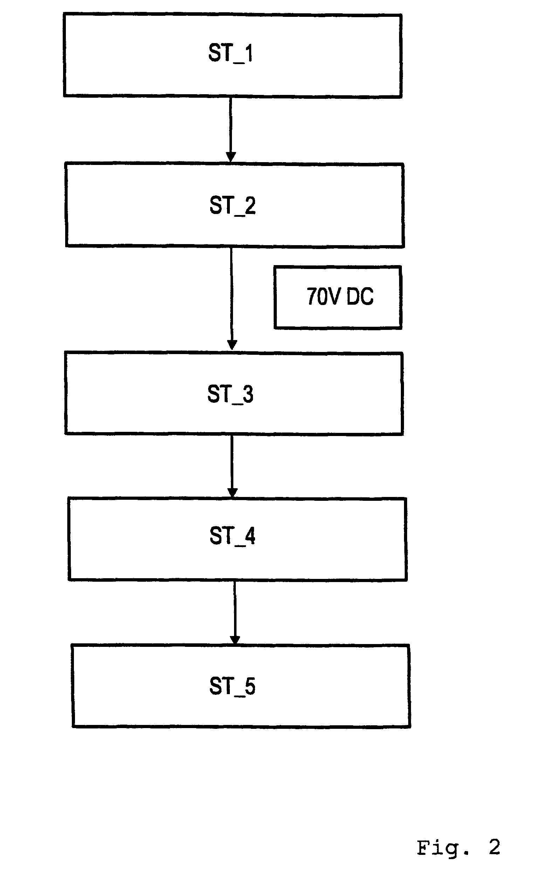

Figur 2 zeigt in einer Übersicht nun noch einmal die wesentlichen Verfahrensschritte zur Bereitstellung einer von der Lastimpedanz einer Teilnehmerschleife 12 abhängenden Rufleerlaufspannung U_{R0}. In einem ersten Schritt ST_1 registriert das Abschlussgerät NT zunächst einfach, dass ein Ruf an eines der drei Teilnehmerendgeräte 6 bis 10 vorgesehen ist.

In einem zweiten Schritt ST_2 stellt das Abschlussgerät NT fest, auf welche Vesorgungsspannung das Netzabschlussgerät NT zurückgreifen kann. Im vorliegenden Fall stellt nun das Netzabschlussgerät NT fest, dass die öffentliche Spannungsversorgung 2 mit 230 V Wechselspannung ausgefallen ist und eine Spannungsversorgung daher nur über die Verbindung 4 zur Vermittlungsstelle möglich ist. Dieser Zustand wird durch ein zwischen dem zweiten Schritt ST_2 und einem dritten Schritt ST_3 eingeschobene Element mit der Bezeichnung 90V DC dargestellt.

Im Schritt ST_3 wird aufgrund der entsprechenden Implementierung einer der beiden analogen a/b-Schnittstellen als zu unterstützende Schnittstelle für den sogenannten Notbetrieb, das heisst Ausfall der Wechselspannungsversorgung aus dem öffentlichen Netz, im vorliegenden Fall für die analoge Schnittstelle a/b_{Not} der Betrag der Lastimpedanz Z_{L} für die gesamte Teilnehmerschleife 12 bestimmt. Hierzu wird mittels des Chipsatzes auf die Teilnehmerschleife 12 eine Wechselspannung U_{AC} durchgeschaltet, deren Amplitude etwa der Amplitude des normalen Sprachsignals auf dieser Teilnehmerschleife 12 entspricht. Die über der Teilnehmerschleife 12 abfallenden Spannungen U1, U2 werden unmittelbar aufeinanderfolgend für zwei verschiedene Frequenzen f₁ und f₂ der Wechselspannung U_{AC} gemessen, woraus nicht nur der Realwert der Lastimpedanz Z_{L} bestimmbar ist, sondern auch die Kapazität C_{L} und der Ohmsche Widerstand R_{L} der Schleife 12.

In einem vierten Schritt wird nun eine dem Betrag der Lastimpedanz |Z_{L}| entsprechende Amplitude der Rufleerlaufspannung U_{R0} ausgewählt, sodass die Leistungsaufnahme des Abschlussgeräts NT jederzeit und im besonderen während des Rufvorgangs einen vom Betreiber des Telekommunikationsnetzes vorgegebenen Wert für die maximale Leistungsaufnahme bei Amtsfernspeisung nicht überschreitet. In der Konsequenz heisst dies, dass an eine niederohmige Schleife 12 auch nur eine entsprechend kleine Rufleerlaufspannung U_{R0} angelegt wird. Liegt eine hochohmige Schleife 12 vor, wird die Rufleerlaufspannung U_{R0} entsprechend grösser gewählt.

Wird nun in diesem vierten Schritt festgestellt, dass die für den Ruf erforderliche Rufleerlaufspannung hinsichtlich der Amplitudenhöhe auch bereitgestellt werden kann, dann folgt in einem abschliessenden fünften Schritt ST_5 die Durchschaltung der Rufleerlaufspannung U_{R0} an die Teilnehmerschleife 12, wodurch das Klingeln des Teilnehmerendgeräts 10 herbeigeführt wird.

Wird jedoch im vierten Verfahrensschritt ST_4 abschliessend festgestellt, dass die für den Notbetrieb vorgesehene Schleife 12 der Schnittstelle a/b_{Not} nicht verfügbar ist, wird das Verfahren ausgehend von Schritt ST_3 automatisch von dem Chipsatz IC eingeleitet, um die Lastimpedanz der anderen Schnittstelle a/b zu bestimmen, um ein im Notbetrieb rufbares Teilnehmerendgerät 8 ausfindig zu machen. Dabei wird zunächst versucht, eine Verbindung über die zweite analoge Schnittstelle a/b zum Teilnehmerendgerät 8 herbeizuführen. Erst wenn dieser Vorgang auch scheitert, wird die digitale S-Schnittstelle S angesprochen. Die Reihenfolge dieser voranstehenden Vorgehensweise kann selbstverständlich auch andersherum implementiert sein.

In Folge der Berücksichtigung der tatsächlich in einer Schleife 12 auftretenden Lastimpedanz und der deraus abgeleiteten Höhe der Amplitude der Rufleerlaufspannung U_{R0} ist der sichere Betrieb eines Netzabschlussgeräts im Notbetrieb dauerhaft ermöglicht, ohne die maximal zulässige Leistungsaufnahme aus der Fernspeisung zu überschreiten. Zugleich liegt als Ergebnis dieses Verfahrens nicht nur der Realwert der Lastimpendanz Z_{L}, sondern es liegen durch die Auswertung des sich aufgrund des Anlegens von zwei Wechselspannungen unterschiedlicher Frequenz ergebenden Gleichungssystems auch konkrete Werte für die Kapazität der Last C_{L} und den Ohmschen Widerstand der Last R_{L} vor.

### Bezugszeichenliste

- 2: öffentliche Spannungsversorgung
- 4: U-Schnittstelle
- 6 bis 10: Teilnehmerendgeräte
- 11: Leitung
- 12: Teilnehmerschleife
- 14: Differenzverstärker
- NT: Netzabschlussgerät
- IC: Chipsatz
- KF: Kennfeld
- S: digitale S-Schnittstelle
- a/b, a/bₙₒₜ: analoge Schnittstellen
- U_{1,2}: Spannungen
- R_{AC}: Innenwiderstand der Wechselstromquelle
- U_{AC}: Wechselspannungsquelle
- I_{L}: Laststrom
- C_{L}: Kapazität
- R_{L}: Ohmscher Widerstand

## Patentansprüche

1. Netzabschlussgerät, insbesondere ISDN-Netzabschlussgerät, mit einem Rufgenerator für ein Teilnehmerendgerät eines Telekommunikationsnetzes, wobei der Rufgenerator einen Rufleerlaufspannungsgeber zur Bereitstellung einer Rufleerlaufspannung an dem Teilnehmerendgerät umfasst,
**dadurch gekennzeichnet, dass**
der Rufleerlaufspannungsgeber die Rufleerlaufspannung (U_{R0}) in Abhängigkeit von der Last, insbesondere von der Lastimpedanz (Z_{L}) und/oder von dem Betrag der Lastimpedanz (|Z_{L}|), in einer Teilnehmerschleife (12) bei der für einen Ruf des Teilnehmerendgeräts (10) vorgesehenen Frequenz (f_{R}) einstellt.

2. Netzabschlussgerät nach Anspruch 1,
**dadurch gekennzeichnet, dass**
die Last (Z_{L}, |Z_{L}|) der Teilnehmerschleife (12) unmittelbar vor dem Ruf des Teilnehmerendgeräts (10) bestimmbar ist.

3. Netzabschlussgerät nach Anspruch 1 oder 2,
**dadurch gekennzeichnet, dass**
zur Bestimmung der Last (Z_{L}, |Z_{L}|) der Teilnehmerschleife (12) eine Wechselspannung (U_{AC}) mit einer Amplitude anlegbar ist, die mit der Amplitude eines Sprachsignals vergleichbar ist.

4. Netzabschlussgerät nach Anspruch 3,
**dadurch gekennzeichnet, dass**
die Wechselspannung (U_{AC}) unmittelbar nacheinander mit zwei verschiedenen Frequenzen (f₁, f₂) anlegbar ist.

5. Netzabschlussgerät nach Anspruch 3 oder 4,
**dadurch gekennzeichnet, dass**
ein Spannungsabfall (U_{1,2}) über der Teilnehmerschleife (12) mit einem Differenzverstärker (14) messbar ist.

6. Netzabschlussgerät nach einem der Ansprüche 1 bis 5,
**dadurch gekennzeichnet, dass**
ein Kennfeld (KF) vorgesehen ist, aus dem ein der ermittelten Last (Z_{L}, |Z_{L}|) entsprechender Wert für die auf die Teilnehmerschleife (12) durchzuschaltende Rufleerlaufspannung (U_{R0}) entnehmbar ist.

7. Netzabschlussgerät nach einem der Ansprüche 1 bis 6,
**dadurch gekennzeichnet, dass**
die Bestimmung der Last (Z_{L}, |Z_{L}|) der Teilnehmerschleife (12) optional nur dann ausführbar ist, wenn eine Versorgungsspannung einem Netzwerk des Telekommunikationsnetzes entnommen ist.

8. Netzabschlussgerät nach Anspruch 7,
**dadurch gekennzeichnet, dass**
eine Fernspeisung mit der Versorgungsspannung aus einer Vermittlungsstelle vorgesehen ist.

9. Verfahren zur Bereitstellung einer Rufleerlaufspannung für ein Teilnehmerendgerät eines Telekommunikationssystems,
**dadurch gekennzeichnet, dass**
die Rufleerlaufspannung (U_{R0}) in Abhängigkeit von der Last einer Teilnehmerschleife (12) und der für einen Ruf des Teilnehmerendgeräts (10) vorgesehenen Frequenz (f_{R}) eingestellt wird.

10. Verfahren nach Anspruch 9,
**dadurch gekennzeichnet, dass**
die Last, insbesondere die Lastimpedanz (Z_{L}) und/oder der Betrag der Lastimpedanz (|Z_{L}|), einer Teilnehmerschleife (12) vor dem Ruf des Teilnehmerendgeräts (10) bestimmt wird.

11. Verfahren nach Anspruch 10,
**dadurch gekennzeichnet, dass**
zur Bestimmung einer Last (Z_{L}, |Z_{L}|) der Teilnehmerschleife (12) nacheinander zwei Wechselspannungen mit unterschiedlicher Frequenz (f₁, f₂) an die Teilnehmerschleife (12) angelegt werden und aus den jeweils aus den Spannungsabfällen über der Teilnehmerschleife (12) die Last (Z_{L}, |Z_{L}|) bei vorgegebener Ausgangsspannung der beiden Wechselspannungen und vorgegebenem Innenwiderstand (R_{AC}) der Wechselspannungsquelle (U_{AC}) berechnet wird.

12. Verfahren nach Anspruch 11,
**dadurch gekennzeichnet, dass**
aus einem Kennfeld (KF) mittels der zuvor bestimmten Last (Z_{L}, |Z_{L}| ) und der für den Ruf vorgesehenen Frequenz der Rufleerlaufspannung (U_{R0}) ein entsprechender Wert für die Rufleerlaufspannung (U_{R0}) abgerufen wird.

13. Verfahren nach Anspruch 11 oder 12,
**dadurch gekennzeichnet, dass**
die Bestimmung der Last (Z_{L}, |Z_{L}|) nur dann durchgeführt wird, wenn eine Versorgungsspannung einem Netzwerk des Telekommunikationsnetzes entnommen wird.
